# EUROPÄISCHE PATENTSCHRIFT

(11) **EP 2 283 460 B1**
(45) Veröffentlichungstag und Bekanntmachung des Hinweises auf die Patenterteilung: **23.03.2016**
(21) Anmeldenummer: 09738037.2
(22) Anmeldetag: 21.04.2009
(51) Int. Cl.: G06T 7/00

(54) **ELEKTROWERKZEUGMASCHINE**
ELECTRICAL MACHINE TOOL
MACHINE-OUTIL ÉLECTRIQUE

(30) Priorität: 30.04.2008 DE 102008001479
(43) Veröffentlichungstag der Anmeldung: 16.02.2011
(73) Patentinhaber: Robert Bosch GmbH, 70442 Stuttgart (DE)
(72) Erfinder: KOEDER, Thilo, 70839 Gerlingen (DE); PLATZER, Joachim, 71686 Remseck-Hochberg (DE)
(86) Internationale Anmeldenummer: PCT/EP2009/054755
(87) Internationale Veröffentlichungsnummer: WO 2009/132993

(56) Entgegenhaltungen:
- DE-U1-202004 005 478
- US-A- 5 010 652
- US-A1- 2003 226 438
- US-A1- 2007 236 565
- AL BOVIK (ED) ED - BOVIK A (ED): "Handbook of Image and Video Processing (FIRST EDITION)" HANDBOOK OF IMAGE AND VIDEO PROCESSING; [COMMUNICATIONS, NETWORKING AND MULTIMEDIA], SAN DIEGO, CA : ACADEMIC PRESS, US, Bd. 1st ed, 31. Mai 2000 (2000-05-31), Seiten 415-423, XP002537755 ISBN: 978-0-12-119790-2

## Beschreibung

### Stand der Technik

Es ist bereits eine Elektrowerkzeugmaschine mit einer Vorrichtung zu einer Erfassung einer Oberfläche eines Werkstücks bekannt.

Die Druckschrift US 5 010 652 A offenbart eine Handwerkzeugmaschine, insbesondere eine Säbelsäge, die zumindest ein Sensormittel aufweist, das zu einer Erfassung einer Oberfläche, insbesondere eines Werkstücks, vorgesehen ist. Ferner weist die Druckschrift US 5 010 652 A eine Auswerteeinheit auf, die dazu vorgesehen ist, eine Differenzierung der Oberfläche anhand von vom Sensormittel erfasster Daten zu einer zumindest teilweisen selbsttätigen Führung zu erkennen. Die Sensormittel sind von zwei Lichtsensoren gebildet, die von einer Lichtquelle der Handwerkzeugmaschine ausgesandtes und von der Oberfläche des Werkstücks reflektiertes Licht sensieren. Verlässt ein Blatt der Handwerkzeugmaschine eine Markierungslinie zur Schnittführung auf der Oberfläche des Werkstücks, so wird dies von den Sensormitteln sensiert und über die Auswerteeinheit ein Signal an einen Blattantriebsmotor der Handwerkzeugmaschine gespendet. Der Blattantriebsmotor korrigiert nun die Stellung des Blattes, so dass eine Abweichung von der Markierungslinie korrigiert wird.

In der Druckschrift DE 20 2004 005 478 U1 wird eine Handwerkzeugmaschine, insbesondere eine Stichsäge, beschrieben, die eine Auswerteeinheit und zumindest ein Sensormittel aufweist, das zu einer Erfassung einer Oberfläche vorgesehen ist. Das Sensormittel sensiert die Oberfläche des Werkstücks und erfasst eine vorgegebene Schnittlinie. Die vom Sensormittel erfassten Daten werden von der Auswerteeinheit dazu genutzt, über eine Schwenkvorrichtung ein Sägeblatt der Stichsäge um eine Hochachse des Sägeblatts so zu verstellen, dass das Sägeblatt einem Verlauf der vorgegebenen Schnittlinie folgt.

Die Druckschrift US 2003/0226438 A1)offenbart eine Elektrowerkzeugmaschine, die eine Auswerteeinheit und zumindest ein Sensormittel, das zu einer Erfassung einer Oberfläche, insbesondere eines Werkstücks, vorgesehen ist, aufweist, wobei die Auswerteeinheit dazu vorgesehen ist, eine Differenzierung der Oberfläche anhand von vom Sensormittel erfasster Daten zu einer zumindest teilweisen selbsttätigen Führung.

### Vorteile der Erfindung

Es wird eine Elektrowerkzeugmaschine, insbesondere eine Handwerkzeugmaschine, mit einer Kontrasterkennungsvorrichtung vorgeschlagen, die eine Auswerteeinheit und zumindest ein Sensormittel ausweist, das zu einer Erfassung einer Oberfläche, insbesondere eines Werkstücks, vorgesehen ist, wobei die Auswerteeinheit dazu vorgesehen ist, eine Differenzierung der Oberfläche anhand von vom Sensomittel erfassten Daten zu einer zumindest teilweise selbsttätigen Führung zu erkennen. In diesem Zusammenhang soll unter "vorgeschen" spezielt ausgelegt und/oder speziell ausgestaltet und/oder speziell programmiert verstanden werden. Des Weiteren soll unter einer "Auswerteeinheit" insbesondere eine Einheit verstanden werden, die von einer Steuereinheit, einer Recheneinheit, einer Kontrolleinheit und/oder einer Regeleinheit gebildet sein kann, wobei die Auswerteeinheit sowohl von einem Prozessor und/oder einem Mikrokontroller allein Als auch insbesondere von einem Prozessor und/oder einem Mikrokontroller und weiteren Elektronikbauteilen, wie beispielsweise einem Speichermittel gebildet sein kann. Ferner soll unter einer "Differenzierung einer Oberfläche" insbesondere eine Unterscheidung von zumindest zwei Bereichen der Oberfläche anhand eines Kontrasts und/oder einer Wellenlängendifferenz zu einer Erkennung von hellen und dunklen Bereichen oder unterschiedlichen Farbbereichen der Oberfläche verstanden werden. Dabei soll unter einem "Kontrast" insbesondere ein Unterscheidungsmerkmal für einen Helligkeitsverlauf und/oder einen Farbverlauf eines Bildes oder zwischen zwei Bildpunkten, insbesondere von durch das Sensormittel erfassten Bildsignalen oder Bildpunkten des Bildes, verstanden werden, wobei vorzugsweise der Kontrast bzw. eine Differenz in dem Helligkeitsverlauf für die Auswerteeinheit erfassbar ist. Durch die erfindungsgemäße Ausgestaltung kann vorteilhaft eine Erkennung einer auf einer Oberfläche eines zu bearbeitenden Werkstücks aufgebrachten Linie, vorzugsweise eine zu der Oberfläche farblich unterschiedliche Linie, wie beispielsweise eine helle bzw. weiße Linie auf einer dunklen oder schwarzen Oberfläche usw., mittels der Differenzierung der Oberfläche des Werkstücks erreicht werden. Des Weiteren kann hierbei besonders vorteilhaft eine zumindest teilweise selbsttätige Linienverfolgung der Elektrowerkzeugmaschine erreicht werden, und zwar indem die Elektrowerkzeugmaschine einem Verlauf der mittels der durch die Kontrasterkennungsvorrichtung erfassten Linie selbsttätig, vorzugsweise gesteuert durch eine Führungseinheit, folgt.

Die Elektrowerkzeugmaschine mit der Kontrasterkennungsvorrichtung kann grundsätzlich von allen, dem Fachmann als sinnvoll erscheinenden Elektrowerkzeugmaschinen gebildet sein, bei denen eine zumindest teilweise Kontrasterkennung einer Werkstückoberfläche und/oder eine zumindest teilweise selbsttätige Linienverfolgung vorteilhaft ist. Besonders vorteilhaft ist die Elektrowerkzeugmaschine jedoch von einer Handwerkzeugmaschine, insbesondere von einer zum Sägen und/oder Schneiden und/oder Schleifen usw. vorgesehenen Handwerkzeugmaschine gebildet, wie beispielsweise eine Stichsäge, eine Handkreissäge usw., wo eine Führung der Handwerkzeugmaschine entlang einer Linie, insbesondere entlang einer auf einer Oberfläche des Werkstücks aufgebrachten Linie, erwünscht ist.

Weiterhin wird vorgeschlagen, dass die Kontrasterkennungsvorrichtung zu einer Kontrastmessung vor zumindest einem Betriebsmodus eines Motors und/oder eines Werkzeugs vorgesehen ist. In diesem Zusammenhang soll unter "vor" insbesondere verstanden werden, dass, insbesondere bei einem einzelnen Arbeitsvorgang, eine erste Aktion, insbesondere die Kontrastmessung, zeitlich vor einer zweiten Aktion, insbesondere ein Betriebsmodus des Motors und/oder des Werkzeugs, erfolgt. Vorzugsweise kann in zumindest einem Ablauf eine erfolgreiche Kontrastmessung eine Bedingung für einen Betriebsmodus des Motors und/oder des Werkzeugs darstellen, d.h. dass insbesondere erst nach einer erfolgreichen Kontrastmessung der Motor gestartet werden kann und/oder ein Bearbeitungsvorgang eines Werkstücks mit dem Werkzeug erfolgen kann. Es kann vorteilhaft eine Kontrastmessung vor einem Arbeitsbeginn mit dem Elektrogerät erfolgen und es kann effektiv ein Kontrast unter Vermeidung von Störeinflüssen, wie beispielsweise Arbeitsreste und/oder Staub, gemessen werden und dabei unerwünschte Ausfälle in der Kontrastmessung, beispielsweise während eines Arbeitsprozesses, vorteilhaft verhindert werden.

Es wird ferner vorgeschlagen, dass die Kontrasterkennungsvorrichtung zumindest ein Beleuchtungsmittel aufweist, das zu einer Ausleuchtung eines Messbereichs vorgesehen ist. Es kann hierbei eine Differenzierung der Oberfläche bzw. ein Kontrast einer Linie durch das Beleuchtungsmittel verstärkt werden und somit eine Kontrasterkennung in der Kontrasterkennungseinheit bzw. in der Auswerteeinheit vereinfacht werden. Zudem können unerwünschte Fremdeinflüsse, wie beispielsweise eine unvorteilhafte Schattenbildung durch eine Fremdbeleuchtung, während der Kontrastmessung vorteilhaft minimiert werden. Vorzugsweise ist das Beleuchtungsmittel von einem spektralen Beleuchtungsmittel, wie beispielsweise von einer Infrarot-Leuchtdiode und/oder einem weiteren, dem Fachmann als sinnvoll erscheinenden Beleuchtungsmittel, gebildet.

Eine konstruktiv einfache und insbesondere Kosten einsparende Kontrastmessung kann erreicht werden, wenn das Sensormittel zumindest teilweise von einer Kamera gebildet ist. Unter einer "Kamera" soll hierbei insbesondere ein Sensormittel verstanden werden, das zu einer Sensierung bzw. Erfassung von statischen und/oder bewegten Bildern, insbesondere der Oberfläche des Werkstücks, vorgesehen ist. Grundsätzlich ist es jedoch auch denkbar, dass das Sensormittel von einem weiteren, dem Fachmann für eine Kontrastmessung als sinnvoll erscheinenden Mittel gebildet ist.

Des Weiteren wird vorgeschlagen, dass die Kontrasterkennungsvorrichtung zumindest ein Filterelement zu einer Selektion zumindest eines Messsignals aufweist, wodurch eine Empfindlichkeit eines Messsignals für die Kontrastmessung insbesondere auf einen festgelegten Spektralbereich eingeschränkt werden kann. Zusätzlich kann hierdurch vorteilhaft eine Trennung des Messsignals von unerwünschten Störsignalen erzielt werden. Hierbei soll unter einem "Filterelement" insbesondere ein optisches Filterelement verstanden werden, das vorzugsweise nur für einen begrenzten Spektralbereich durchlässig ist.

Es wird weiterhin vorgeschlagen, dass die Auswerteeinheit zumindest ein Differenziermittel zur Erfassung eines Kontrasts aufweist, wodurch insbesondere konstruktiv einfach eine Kontraständerung der sensierten Oberfläche erfasst bzw. bestimmt werden kann, und zwar indem das Differenziermittel das sensierte Messsignal durch Bildung eines Differentialquotienten differenziert und dabei Änderungen im Signalverlauf besonders einfach und sicher erkannt werden können. In diesem Zusammenhang soll unter einem "Differenziermittel" insbesondere ein elektronisches, vorzugsweise ein analoges Bauteil verstanden werden, in dem ein Eingangssignal durch Differentiation umgewandelt wird, insbesondere um Schwankungen und/oder Änderungen des Eingangssignals bzw. des Kontrastsignals in Abhängigkeit eines Differenzierparameters zu erkennen. Das Differenziermittel kann hierbei von einem Operationsverstärker, einem Analogwertverarbeiter eines Mikrokontrollers und/oder weiteren, dem Fachmann als sinnvoll erscheinenden analogen Bauteilen und/oder Bestandteilen von Softwareprogrammen gebildet sein.

Ferner wird vorgeschlagen, dass die Kontrasterkennungsvorrichtung zumindest ein Einstellmittel aufweist, das zu einem Einstellen eines Schwellenwerts für zumindest einen Kontrastparameter vorgesehen ist. Hierdurch kann vorteilhaft eine Kontrasterkennung an einen Farbverlauf und/oder einen Helligkeitsverlauf der Oberfläche angepasst werden. Das Einstellmittel kann hierbei von einem manuellen Einstellmittel gebildet sein für eine manuelle Einstellung des Schwellenwerts durch den Bediener und/oder von einem Einstellmittel zu einer zumindest teilweisen automatisierten Einstellung, vorzugsweise gesteuert durch die Auswerteeinheit, gebildet sein. Das Einstellmittel kann hierbei von einem D/A-Wandler und/oder weiteren, dem Fachmann als sinnvoll erscheinenden Bauteilen gebildet sein.

In einer weiteren Ausgestaltung der Erfindung wird ein Kontrasterkennungsverfahren für eine Elektrowerkzeugmaschine, insbesondere eine Handwerkzeugmaschine, mit einer Kontrasterkennungsvorrichtung, die für eine zumindest teilweise selbsttätige Führung der Elektrowerkzeugmaschine zu einer Kontrastmessung vorgesehen ist, vorgeschlagen, wobei in zumindest einem Kontrasterkennungsmodus eine Kontrastmessung von einer Oberfläche eines Werkstücks erfolgt. Es kann hierbei eine Erkennung einer auf einer Oberfläche eines zu bearbeitenden Werkstücks aufgebrachten Linie, wie beispielsweise eine helle bzw. weiße Linie auf einer dunklen oder schwarzen Oberfläche usw., in dem Kontrasterkennungsmodus der Kontrasterkennungsvorrichtung erreicht werden. Unter einem "Kontrasterkennungsmodus" soll hierbei insbesondere ein Betriebsmodus der Kontrasterkennungsvorrichtung zu einer Kontrastmessung verstanden werden.

Besonders vorteilhaft erfolgt in dem Kontrasterkennungsverfahren der Kontrasterkennungsmodus der Kontrasterkennungsvorrichtung vor zumindest einem Betriebsmodus eines Motors und/oder eines Werkzeugs der Elektrowerkzeugmaschine. Hierdurch kann vorteilhaft eine Kontrastmessung vor einem Arbeitsbeginn mit dem Elektrogerät erfolgen und es kann effektiv ein Kontrast unter Vermeidung von Störeinflüssen, wie beispielsweise Arbeitsreste und/oder Staub, gemessen werden. Es wird ferner vorgeschlagen, dass in dem Kontrasterkennungsmodus ein Beleuchtungsparameter, insbesondere ein spektraler Beleuchtungsparameter, eingestellt wird, wodurch ein Kontrast einer Linie verstärkt werden und somit eine Kontrastmessung bzw. eine Kontrasterkennung vereinfacht werden kann. Zudem können unerwünschte Fremdeinflüsse, wie beispielsweise eine unvorteilhafte Schattenbildung durch eine Fremdbeleuchtung, während der Kontrastmessung vorteilhaft minimiert werden.

Des Weiteren wird vorgeschlagen, dass zumindest ein Kontrastparameter durch Bildung eines Differentialquotienten zumindest eines sensierten Messsignals ermittelt wird, wodurch insbesondere konstruktiv einfach eine Kontraständerung der sensierten Oberfläche erfasst bzw. bestimmt werden kann, und zwar indem das Differenziermittel das sensierte Messsignal durch Bildung eines Differentialquotienten differenziert und dabei Änderungen im Signalverlauf besonders einfach und sicher erkannt werden können. In diesem Zusammenhang soll unter einem "Kontrastparameter" insbesondere ein Parameter verstanden werden, der einen Kontrastverlauf bzw. eine Änderung im Helligkeitsverlauf eines Bildes wiedergibt.

Eine vorteilhafte, an einen Farbverlauf und/oder einen Helligkeitsverlauf der Oberfläche angepasste Kontrasterkennung kann erreicht werden, wenn ein Schwellenwert für eine Kontrastmessung eingestellt wird.

Besonders vorteilhaft wird in zumindest einem Kontrasterkennungsmodus ein Linienverlauf auf einer Oberfläche eines Werkstücks zu einer zumindest teilweise selbsttätigen Führung der Elektrowcrkzeugmaschine erfasst, wodurch insbesondere eine zumindest teilweise automatische Führung der Elektrowerkzeugmaschine erzielt und dabei ein hoher Bedienkomfort für einen Bediener erreicht werden kann.

Es wird ferner vorgeschlagen, dass ein Kontrastparameter der Kontrastmessung zur Einstellung des Sensormittels, insbesondere der Kamera verwendet wird, wodurch eine vorteilhafte Anpassung und/oder Einstellung des Sensormittels, insbesondere zur Anpassung und/oder Einstellung eines Sensorparameters, zur Erkennung des Kontrasts vor und/oder während einer Kontrastmessung erreicht werden kann. Vorzugsweise wird mittels der Anpassung und/oder der Einstellung des Sensorparameters des Sensormittels insbesondere ein Verstärkungsfaktor, wie beispielsweise ein Gain-Faktor, und/oder ein Weißabgleich des Sensormittels eingestellt und/oder angepasst. Besonders vorteilhaft erfolgt die Anpassung und/oder Einstellung des Sensormittels automatisiert und vorzugsweise gesteuert durch die Auswerteeinheit.

Zudem wird vorgeschlagen, dass zumindest ein Informationsparameter der Kontrastmessung an einen Bediener ausgegeben wird. In diesem Zusammenhang soll unter einem "Informationsparameter" insbesondere ein Parameter verstanden werden, der eine Information, insbesondere einen aktuellen Status, über einen Kontrastbetriebsmodus und/oder eine Kontrastmessung der Kontrasterkennungsvorrichtung enthält. Vorzugsweise weist hierfür die Kontrasterkennungsvorrichtung bzw. die Elektrowerkzeugmaschine eine Ausgabeeinheit für eine Ausgabe des Informationsparameters auf. Durch diese Ausgestaltung kann ein Bediener vorteilhaft einen aktuellen Status einer Kontrastmessung abrufen. Zudem kann für den Fall, dass die Kontrastverhältnisse für eine Differenzierung der Oberfläche des zu bearbeitenden Werkstücks unzureichend sind, dies einem Bediener des Elektrogeräts vor einem Arbeitsbeginn mitgeteilt werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu simwollen weiteren Kombinationen zusammenfassen.

Es zeigen:
- Fig. 1: eine von einer Stichsäge gebildete Elektrowerkzeugmaschine mit einer Kontrasterkennungsvorrichtung in einer schematischen Ansicht,
- Fig. 2: eine schematische Ansicht der Kontrasterkennungsvorrichtung,
- Fig. 3: einen schematisch dargestellten Verfahrensablauf einer Kontrastmessung,
- Fig. 4: einen Teilbereich einer für eine Kontrastmessung vorgesehene Oberfläche eines Werkstücks in einer Teilansicht,
- Fig. 5: ein von einer Sensoreinheit der Kontrasterkennungsvorrichtung erfasstes Messsignal und
- Fig. 6: ein von einem Differenziermittel umgewandeltes Signal zur Bestimmung eines Kontrastes.

### Beschreibung des Ausführungsbeispiels

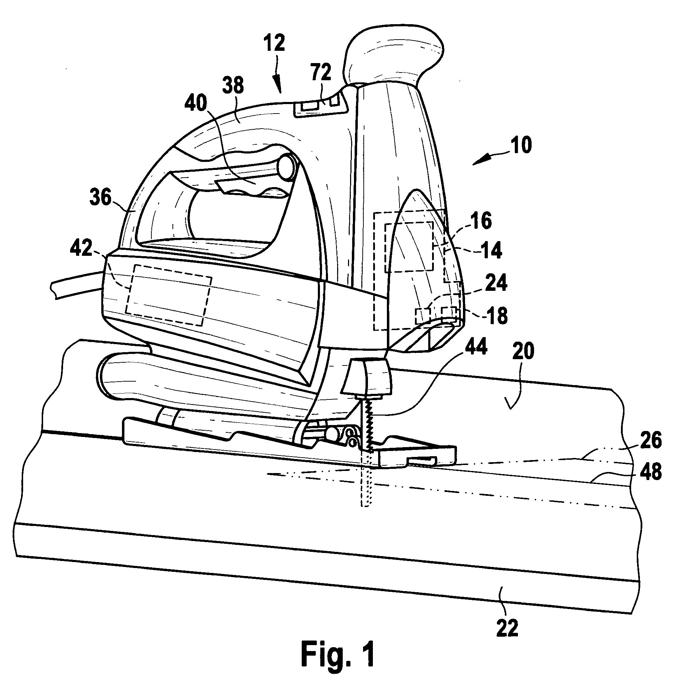

In Figur 1 ist eine erfindungsgemäße, von einer Handwerkzeugmaschine 12 dargestellte Elektrowerkzeugmaschine 10 dargestellt. Die Handwerkzeugmaschine 12 ist von einer Stichsäge gebildet. Grundsätzlich könnte die Handwerkzeugmaschine 12 auch von einer weiteren, dem Fachmann als sinnvoll erscheinenden Handwerkzeugmaschine 12 bzw. Elektrowerkzeugmaschine 10, wie beispielsweise einer Handkreissäge usw. gebildet sein. Die Handwerkzeugmaschine 12 weist ein Gehäuse 36 mit einem Griffbereich 38 und einem Schaltelement 40 zu einem Ein- oder Ausschalten der Handwerkzeugmaschine 12 auf. Innerhalb des Gehäuses 36 der Handwerkzeugmaschine 12 ist eine Motoreinheit 42 angeordnet, mittels der ein Werkzeug 44 über eine nicht näher dargestellte Motorwelle und ein nicht näher dargestelltes Getriebe antreibbar ist. Ferner weist die Handwerkzeugmaschine 12 eine Kontrasterkennungsvorrichtung 14 mit einer Auswerteeinheit 16 und einem Sensormittel 18 auf, das zu einer Erfassung einer Oberfläche 20 eines zu bearbeitenden Werkstücks 22 vorgesehen ist. Die Auswerteeinheit 16 ist hierbei dazu vorgesehen, eine Differenzierung der Oberfläche 20 in Form eines Kontrasts und/oder einer Wellenlängendifferenz anhand von vom Sensormittel 18 erfassten Daten zu einer zumindest teilweise selbsttätigen Führung der Handwerkzeugmaschine 12 zu erkennen. Hierbei erfolgt in zumindest einem Kontrasterkennungsmodus KM 1 eine Kontrastmessung von der Oberfläche 20 des Werkstücks 22.

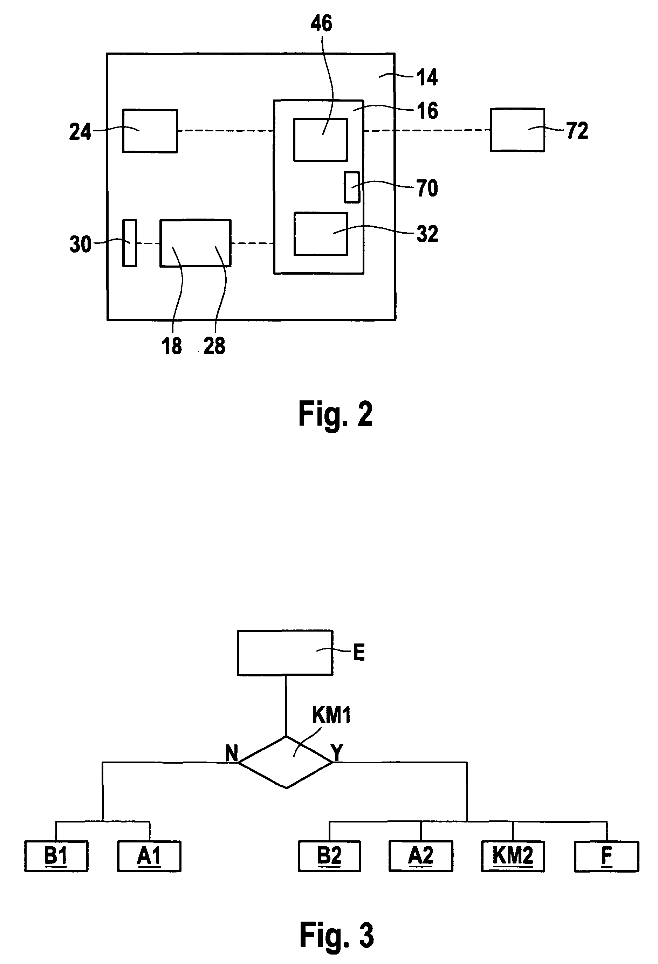

In Figur 2 ist eine Ansicht der Kontrasterkennungsvorrichtung 14 schematisch dargestellt. Die Kontrasterkennungsvorrichtung 14 weist neben der Auswerteeinheit 16 und dem von einer Kamera 28 gebildeten Sensormittel 18 zudem ein Beleuchtungsmittel 24 und ein Filterelement 30 auf. Das Beleuchtungsmittel 24 ist zu einer Ausleuchtung eines Messbereichs 26 in einem Kontrasterkennungsmodus vorgesehen und das Filterelement 30 zu einer Selektion eines Messsignals. Hierzu ist das Filterelement 30 entlang eines bei dem Sensormittel 18 eingehenden Signalwegs vor dem Sensormittel 18 angeordnet. Ferner sind innerhalb der Kontrasterkennungsvorrichtung 14 ein von der Auswerteeinheit 16 umfasstes Differenziermittel 32 zur Erfassung eines Kontrasts und ein von der Auswerteeinheit 16 umfasster Mikrokontroller 46 angeordnet. Zur Erfassung der Oberfläche 20 des Werkstücks 22 erfolgt in der Kontrasterkennungsvorrichtung 14 eine Kontrastmessung eines ersten Kontrasterkennungsmodus KM1 vor einem Betriebsmodus B1, B2 eines ersten Betriebs der Motoreinheit 42 und/oder des Werkzeugs 44 der Handwerkzeugmaschine 12 (Figur 3), so dass vor einem Arbeitsbeginn eine Kontrastmessung zur Erfassung einer auf der Oberfläche 20 aufgebrachten Führungslinie 48 erfolgen kann.

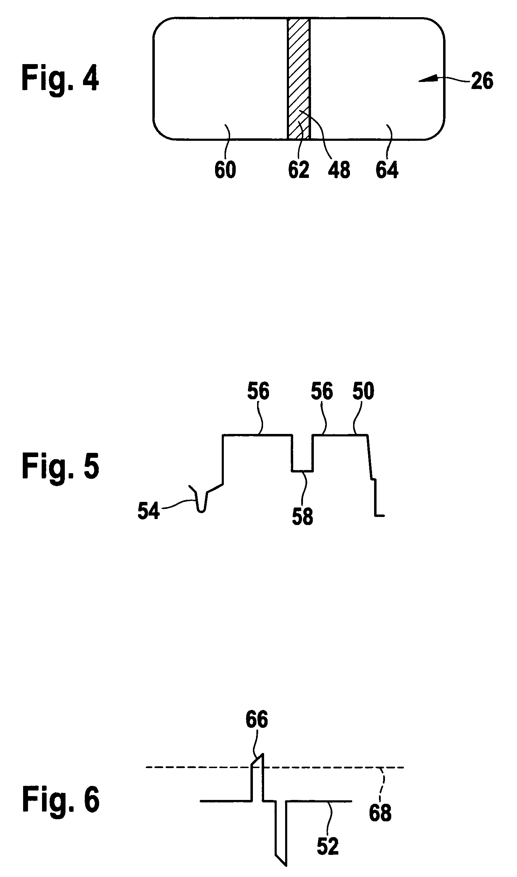

Hierbei erfolgt zunächst nach einem Einschaltvorgang E der Handwerkzeugmaschine 12 in dem ersten Kontrasterkennungsmodus KM1 eine Kontrastmessung, indem das Sensormittel 18, aktiviert von der Auswerteeinheit 16, die Oberfläche 20 bzw. den Messbereich 26 der Oberfläche 20 des Werkstücks 22 sensiert (Figuren 1 und 4). Anschließend werden innerhalb der Auswerteeinheit 16 die sensierten Daten analysiert. Hierzu werden die von dem Sensormittel 18 sensierten Daten über eine interne, nicht näher dargestellte Datenleitung zu der Auswerteeinheit 16 geleitet und dort von dem Differenziermittel 32 weiterverarbeitet. Im Differenziermittel 32 wird von einem Messsignal 50 des Sensormittels 18 ein Differentialquotient gebildet. Anschließend erfolgt in dem Mikrokontroller 46 eine Auswertung des Signals 52 des Differenziermittels 32.

Zu einer effektiven Kontrastmessung wird zudem gesteuert von der Auswerteeinheit 16 der Messbereich 26 der Oberfläche 20 des Werkstücks 22 durch das von einem spektralen Beleuchtungsmittel gebildeten Beleuchtungsmittel 24 ausgeleuchtet und dabei eine Kontrastschärfe der Oberfläche 20 bzw. der auf der Oberfläche 20 aufgebrachten Führungslinie 48 gegenüber der Oberfläche 20 verstärkt. Das Beleuchtungsmittel 24 ist von einer Infrarot-Leuchtdiode gebildet. Die Ausleuchtung des Messbereichs 26 durch das Beleuchtungsmittel 24 wird durch die Auswerteeinheit 16 gesteuert. Hierbei wird ein Beleuchtungsparameter des Beleuchtungsmittels 24 von der Auswerteeinheit 16 an einen mittels des Sensormittels 18 und des Differenziermittels 32 erfassten Kontrastverlauf bzw. einen Helligkeitsverlauf des Messbereichs 26 der Oberfläche 20 angepasst. Des Weiteren wird gesteuert von der Auswerteeinheit 16 ein während der Kontrastmessung ermittelter Kontrastparameter zu einer Einstellung der Sensoreinheit, insbesondere eines Sensorparameters, wie beispielsweise ein Verstärkungsfaktor und/oder ein Weißabgleich, verwendet und so das sensierte Messsignal 50 des Sensormittels 18 bzw. der Kamera 28 an einen Kontrastverlauf des Messbereichs 26 angepasst.

Ist eine Kontrasterkennung durch die Kontrasterkennungsvorrichtung 14 erfolglos, erfolgt eine erste Ausgabe A1 eines Informationsparameters an den Bediener der Handwerkzeugmaschine 12 und ein normaler Betriebsmodus B1 der Handwerkzeugmaschine 12 mit einer manuellen Führung durch den Bediener kann gestartet werden. Ist eine Kontrasterkennung durch die Kontrasterkennungsvorrichtung 14 erfolgreich, wird dies durch eine Ausgabe A2 eines Informationsparameters dem Bediener mitgeteilt und es kann ferner ein Betriebsmodus B2 der Handwerkzeugmaschine 12 mit einem Führungsmodus F einer zumindest teilweise selbsttätigen Führung entlang der Führungslinie 48 erfolgen. Die erfolgreiche Kontrasterkennung stellt eine Bedingung für den Führungsmodus F dar. Des Weiteren erfolgt zeitgleich zu dem Betriebsmodus B2 der Handwerkzeugmaschine 12 ein zweiter Kontrasterkennungsmodus KM2 zu einer ständigen Erkennung der Führungslinie 48.

Zur Ausgabe des Informationsparameters der Kontrastmessung weist die Handwerkzeugmaschine 12 eine Ausgabeeinheit 72 auf. Die Ausgabeeinheit 72 umfasst ein optisches und ein akustisches Ausgabemittel, wobei über das optische Ausgabemittel eine von der Kontrasterkennungsvorrichtung 14 erfasste Führungslinie 48 für den Bediener der Handwerkzeugmaschine 12 ausgegeben werden kann und über das akustische Ausgabemittel gegebenenfalls eine Fehlermeldung ausgegeben wird. Dies ist insbesondere für den Fall von Bedeutung, indem eine Erfassung der auf die Oberfläche 20 aufgebrachten Führungslinie 48 aufgrund von Verunreinigungen und/oder weiterer störender Fremdeinwirkungen erfolglos ist, so dass dies einem Bediener vor einem Arbeitsbeginn mitgeteilt werden kann.

In Figur 5 ist ein sensiertes Messsignal 50 des von einer Videokamera gebildeten Sensormittels 18 dargestellt. Hierbei ist ein erster, sich nach unten erstreckender Signalbereich 54 von einem Startsignal für das Differenziermittel 32 gebildet. Das Startsignal ist von einem separaten, nicht näher dargestellten Bauteil gebildet. Unterschiedliche Bereiche 60, 62, 64 mit unterschiedlichen Helligkeitsstufen auf der Oberfläche 20 des Werkstücks 22 werden in dem Messsignal 50 der Videokamera von einer unterschiedlichen Signalhöhe wiedergegeben. In dem in Figur 5 dargestellten Signalverlauf ist ein erster Bereich 60 mit einer hellen Oberfläche 20 des Werkstücks 22 aus Figur 4 durch eine hohe Stufe 56 im Messsignal 50 wiedergegeben. Ein zweiter, dunkler, durch die aufgebrachte Führungslinie 48 gebildeter Bereich 62 (in Figur 4 mit Schraffur dargestellt) ist von einer niedrigen Stufe 58 im Messsignal 50 wiedergegeben. Ein sich daran anschließender dritter, heller Bereich 64 der Oberfläche 20 ist analog zu dem ersten Bereich 60 wieder durch eine hohe Stufe 56 im Messsignal 50 der Videokamera gebildet. Das Messsignal 50 der Videokamera wird an die Auswerteeinheit 16 weitergeleitet und von dem Differenziermittel 32 differenziert bzw. ein Differentialquotient des Messsignals 50 gebildet.

Ein differenziertes Signal 52 des Differenziermittels 32 bzw. ein Ausgangssignal des Differenziermittels 32 ist in Figur 6 dargestellt. Eine Änderung in dem Messsignal 50 der Videokamera bewirkt einen Sprung 66 im Verlauf des Differentialquotienten bzw. des differenzierten Signals 52, wobei diesem Sprung 66 ein abrupter Übergang von dem hellen Bereich 60, 64 zu dem angrenzenden dunklen bzw. schwarzen Bereich 62 zu Grunde liegt (Figur 4). Der Verlauf des Signals 52 im Bereich des Sprungs 66 ist von einer nichtstetigen Funktion gebildet. Ein Wert des Differentialquotienten des Signals 52 ist von einem Kontrastparameter gebildet.

Eine Auswertung der von dem Differenziermittel 32 differenzierten Daten erfolgt in dem Mikrokontroller 46 der Auswerteeinheit 16. Zur Erkennung eines eindeutigen Kontrasts innerhalb der Auswerteeinheit 16 muss ein Wert des Differentialquotienten bzw. des Kontrastparameters über einem festgelegten Schwellenwert 68 liegen. Die Kontrasterkennungsvorrichtung 14 weist ferner ein Einstellmittel 70 auf, das zu einem Einstellen eines Schwellenwerts 68 für zumindest einen Kontrastparameter vorgesehen ist. Das Einstellmittel 70 ist von der Auswerteeinheit 16 umfasst. Zudem ist das Einstellmittel 70 von einem zu einer manuellen Einstellung vorgesehenen Einstellmittel 70 gebildet, so dass ein Bediener im Betrieb der Handwerkzeugmaschine 12 eine Anpassung der Kontrasterkennung vornehmen kann. Grundsätzlich ist es in einer weiteren Ausgestaltung der Erfindung jederzeit denkbar, dass das Einstellmittel 70 automatisch von der Auswerteeinheit 16 steuerbar ist. Ein Bediener kann hierbei bei unzureichenden Kontrastverhältnissen den Schwellenwert 68 durch das Einstellmittel 70 variieren, so dass eine Kontrasterkennung in der Auswerteeinheit 16 wieder möglich wird, wie beispielsweise eine graue Oberfläche 20 mit einer um einige Graustufen dunkleren Führungslinie 48 oder ein langsamer, in Graustufen erfolgender Übergang von der Oberfläche 20 zur Führungslinie 48 usw., wobei hier eine Signaländerung im Differenziermittel 32 durch eine geringe Steigung im Signalverlauf erkennbar ist. Der Schwellenwert 68 des Einstellmittels 70 muss bei einer Variation immer über einer festgelegten Mindestschwelle liegen.

Mittels der Kontrastmessung bzw. einem Kontrasterkennungsverfahren der Kontrasterkennungsvorrichtung 14 wird somit die Führungslinie 48, entlang derer die Handwerkzeugmaschine 12 im Betrieb geführt werden soll, erkannt. Hierzu weist die Handwerkzeugmaschine 12 eine nicht näher dargestellte Führungseinheit auf, die zu einer zumindest teilweise selbsttätigen Führung der Handwerkzeugmaschine 12 entlang der mittels der Kontrasterkennungsvorrichtung 14 erfassten Führungslinie 48 auf der Oberfläche 20 des Werkstücks 22 im Betrieb der Handwerkzeugmaschine 12 erfolgt.

## Patentansprüche

1. Kontrasterkermungsverfahren für eine Handwerkzeugmaschine (12), insbesondere eine Stichsage, mit eine Kontrasterkennungsvorrichtung (14), die eine Auswerteeinheit (16) und zumindest ein Sensormittel (18) aufweist und die für eine zumindest teilweise selbsttätige Führung der Handwerkzeugmaschine (12) vorgesehen ist, wobei in zumindest einem Kontrasterkennungsmodus (KM1, KM2) eine Kontrastmessung von einer Oberfläche (20) eines Werkstücks (22) mittels des Sensormittels (18) erfolgt, **dadurch gekennzeichnet, dass** der Kontrasterkennungsmodus (KM1) der Kontrasterkennungsvorrichtung (14) vor einem Arbeitsbeginn in zumindest einem Betriebsmodus (B1, B2) eines Motors und/oder eines Werkzeugs (44) der Handwerkzeugmaschine (12) derart erfolgt, dass im Falle einer erfolglosen Kontrasterkennung ein erster Informationsparameter (A1) an einen Bediener der Handwerkzeugmaschine (12) ausgegeben wird, so dass nur ein normaler Betriebsmodus (B1) der Handwerkzeugmaschine (12) mit einer manuellen Führung durch den Bediener gestartet werden kann, und im Falle einer erfolgreichen Kontrasterkennung ein weiterer Informationsparameter (A2) an den Bediener ausgegeben wird, so dass ein weiterer Betriebsmodus (B2) der Handwerkzeugmaschine (12) mit einem Führungsmodus (F) zur zumindest teilweisen selbsttätigen Führung entlang einer Führungslinie (48) erfolgen kann.

2. Kontrasterkennungsverfahren nach. Anspruch 1, **dadurch gekennzeichnet** zeitgleich zu dem weiteren Betriebsmodus (B2) der Handwerkzeugmaschine (12) ein zweiter Kontrasterkennungsmodus (KM2) zu einer standigen Erkennung der Führungslinie (48) durchgeführt wird.

3. Kontrasterkennungsverfahren nach einem der Anspruch 1 oder 2, **dadurch gekennzeichnet, dass** in dem zumindest einen Kontrasterkennungsmodus (KM1, KM2) ein Beleuchtungsparameter eingestellt wird.

4. Kontrasterkennungsverfahren nach einem der ansprüche 1 oder 2, **dadurch gekennzeichnet, dass** zumindest ein Kontrastparameter durch Bildung eines Differentialquotienten zumindest eines sensierten Messsignals (50) ermittelt wird.

5. Kontrasterkennungsverfahren nach einem der vorhergehenden Ansprüche, **dadurch gekennzeichnet, dass** ein Schwellenwert (68) für die Kontrastmessung eingestellt wird,

6. Kontrasterkennungsverfahren nach einem der vorhergehenden Anspruche, **dadurch gekennzeichnet, dass** zumindest ein Kontrastparameter der Kontrastmessung zur Einstellung des Sensormittels (18) verwendet wird.

## Claims

1. Contrast detection method for a hand-held power tool (12), in particular a jigsaw, with a contrast detection device (14), which has an evaluation unit (16) and at least one sensor means (18) and is intended for at least partial automatic guidance of the hand-held power tool (12), wherein, in at least one contrast detection mode (KM1, KM2), a contrast measurement of a surface (20) of a workpiece (22) is performed by means of the sensor means (18), **characterized in that** the contrast detection mode (KM1) of the contrast detection device (14) is performed before work is commenced in at least one operating mode (B1, B2) of a motor and/or tool element (44) of the hand-held power tool (12) in such a way that in the event of an unsuccessful contrast detection a first information parameter (A1) is output to an operator of the hand-held power tool (12), so that only a normal operating mode (B1) of the hand-held power tool (12) with manual guidance can be started by the operator, and in the event of a successful contrast detection a further information parameter (A2) is output to the operator, so that a further operating mode (B2) of the hand-held power tool (12) with a guiding mode (F) for the at least partial automatic guidance along a guiding line (48) can be performed.

2. Contrast detection method according to Claim 1, **characterized in that**, at the same time as the further operating mode (B2) of the hand-held power tool (12), a second contrast detection mode (KM2) is carried out for constant detection of the guiding line (48).

3. Contrast detection method according to either of Claims 1 and 2, **characterized in that** in the at least one contrast detection mode (KM1, KM2) an illumination parameter is set.

4. Contrast detection method according to either of Claims 1 and 2, **characterized in that** at least one contrast parameter is determined by forming a differential quotient of at least one sensed measurement signal (50).

5. Contrast detection method according to one of the preceding claims, **characterized in that** a threshold value (68) is set for the contrast measurement.

6. Contrast detection method according to one of the preceding claims, **characterized in that** at least one contrast parameter of the contrast measurement is used for setting the sensor means (18).

## Revendications

1. Procédé de détection par contraste pour une machine-outil manuelle (12), notamment une scie sauteuse, avec un dispositif de détection de contraste (14) comportant une unité d'analyse (16) et au moins un moyen de détection (18) et prévu pour un guidage au moins en partie automatique de la machine-outil manuelle (12), sachant que dans au moins un mode de détection par contraste (KM1, KM2), une mesure de contraste se produit à partir d'une surface (20) d'une pièce usinée (22) à l'aide du moyen de détection (18), **caractérisé en ce que** le mode de détection par contraste (KM1) du dispositif de détection de contraste (14) se produit de telle sorte, avant un début de travail dans au moins un mode de fonctionnement (B1, B2) d'un moteur et/ou d'un outil (44) de la machine-outil manuelle (12) qu'en cas de détection par contraste non réussie, un premier paramètre d'information (A1) est envoyé à un utilisateur de la machine-outil manuelle (12), de sorte que seul un mode de fonctionnement normal (B1) de la machine-outil manuelle (12) avec un guidage manuel peut être démarré par l'utilisateur et qu'en cas de détection par contraste réussie, un paramètre d'information (A2) supplémentaire est envoyé à l'utilisateur, de sorte qu'un mode de fonctionnement (B2) supplémentaire de la machine-outil manuelle (12) avec un mode de guidage (F) peut se produire pour réaliser le guidage au moins partiellement automatique le long d'une ligne de guidage (48).

2. Procédé de détection par contraste selon la revendication 1, **caractérisé en ce que** simultanément au mode de fonctionnement (B2) de la machine-outil manuelle (12), un deuxième mode de détection par contraste (KM2) est exécuté pour réaliser une détection permanente de la ligne de guidage (48).

3. Procédé de détection par contraste selon l'une quelconque des revendications 1 ou 2, **caractérisé en ce que** dans l'au moins un mode de détection par contraste (KM1, KM2), un paramètre d'éclairage est réglé.

4. Procédé de détection par contraste selon l'une quelconque des revendications 1 ou 2, **caractérisé en ce qu'**au moins un paramètre de contraste est déterminé par formation d'un quotient différentiel d'au moins un signal de mesure (50) détecté.

5. Procédé de détection par contraste selon l'une quelconque des revendications précédentes, **caractérisé en ce qu'**une valeur seuil (68) est réglée pour la mesure de contraste.

6. Procédé de détection par contraste selon l'une quelconque des revendications précédentes, **caractérisé en ce qu'**au moins un paramètre de contraste de la mesure de contraste est utilisé pour régler le moyen de détection (18).
